# EUROPÄISCHE PATENTSCHRIFT

(11) **EP 3 018 455 B1**
(45) Veröffentlichungstag und Bekanntmachung des Hinweises auf die Patenterteilung: **19.06.2019**
(21) Anmeldenummer: 14192076.9
(22) Anmeldetag: 06.11.2014
(51) Int. Cl.: G01F 15/06, G01F 1/075

(54) **Impulsgeber für einen Fluidzähler**
Pulse generator for a fluid counter
Générateur d'impulsions pour un compteur de fluide

(43) Veröffentlichungstag der Anmeldung: 11.05.2016
(73) Patentinhaber: Elster GmbH, 55252 Mainz-Kastel (DE)
(72) Erfinder: Badura, Markus, 55122 Mainz (DE); Stumpf, Jan, 55128 Mainz (DE)
(74) Vertreter: Zenz Patentanwälte Partnerschaft mbB

(56) Entgegenhaltungen:
- DE-A1-102013 003 190
- US-A1- 2012 274 478

## Beschreibung

Die Erfindung betrifft einen Impulsgeber für eine Zähleranordnung zur Erfassung von Durchflussmengen eines Fluides, insbesondere für Gaszähleinrichtungen oder Wasserzähleinrichtungen.

Aus dem Stand der Technik sind Zähleinrichtungen für Fluide bekannt, bei denen mittels eines Sensors der Fluss eines Fluid erfasst wird. Der Sensor ist mit einer Impulsgeber-Einrichtung zur Erfassung der Sensorsignale und zur Erzeugung von Ausgangspulsen aus diesen Sensorsignalen gekoppelt. Diese Impulsgeber wandeln also sensorspezifische Signale in Pulssignale, die dann einen nachgeordneten Auswertegerät, z.B. einem Mengenumwerter oder Flow-Computer zugeleitet werden. In einem solchen nachgeordneten Gerät wird dann anhand der Pulse und ggf. weiteren Werten (Temperatur, Druck) die tatsächliche Menge des durchgeleiteten Fluides bestimmt.

Es sind unterschiedliche Systeme für derartige Impulsgeber bekannt, wobei die bekannten Systeme teilweise auch Sensor und nachgeordnete Auswerteeinheiten mit den Impulsgebern integrieren.

Für die Pulserzeugung und Speicherung der ermittelten Werte in dem Impulsgeber, welcher mit dem Sensor gekoppelt ist, werden regelmäßig jedoch eigenständige Spannungsversorgungen benötigt.

Als Sensoren zur Erzeugung der Eingangspulse für den Impulsgeber kommen aktive und passive Sensoren in Betracht. Die Verwendung von Wiegand-Sensoren als aktive Sensoren ist in der Messtechnik bekannt, beispielsweise sei hier auf die
US 5,530,298 verwiesen. Der Wiegand-Sensor benötigt als aktiver Sensor keine eigene Spannungsversorgung und ist in der Lage, beispielsweise im Bereich eines rotierenden Permanentmagneten einer Zähleinrichtung angeordnet zu werden und elektrische Signale zu erzeugen, wenn der Magnet durch den Fluidfluss bewegt wird und sich das den Sensor durchgreifende Magnetfeld aufgrund dieser Bewegung ändert.

Die Ausbildung eines Impulsgebers ohne separate Energieversorgung, z.B. Batterien oder eigene, separate Netzanschlüsse ist wünschenswert, um eine wartungsarme und universell einsetzbare Einrichtung zu erhalten.

Beispielsweise beschreibt die DE 10 2013 003 190 einen batterielosen Zähler für Gas- oder Wasserzähler unter Verwendung eines Wiegand-Sensors. Aus dem Wiegand-Sensor selbst, also aus dessen Sensorsignalen ist eine geringe Energiemenge für den Impulsgeber zu gewinnen, diese Energiemenge reicht jedoch regelmäßig nicht aus, um die gewünschte Verlässlichkeit und Qualität hinsichtlich der Pulsumwertung für die nachgeordneten Mengenumwerter bereitzustellen.

Aufgabe der Erfindung ist es, einen verbesserten Impulsgeber bereitzustellen, welcher ohne separate Energieversorgung arbeitet.

Diese Aufgabe wird gelöst durch einen Impulsgeber mit den Merkmalen des Patentanspruchs 1.

Der erfindungsgemäße Pulsgeber weist eine eingangsseitig eine Schnittstelle für von einem Sensor stammende Eingangssignale auf. Ein solcher Sensor kann beispielsweise ein Impulsdraht-Sensor (Wiegand-Sensor) sein - es ist jedoch auch die Verwendung anderer Sensorarten möglich, z.B. von Hall-Sensoren, die allerdings eine Versorgungsspannung benötigen. Außerdem weist der erfindungsgemäße Impulsgeber eine ausgangsseitige Schnittstelle zu einem nachgeschalteten Auswertegerät auf. Über diese Ausgangsschnittstelle werden Impulse ausgegeben, die in Abhängigkeit von den sensorseitig erzeugten Signalen und im Pulsgeber aufsummierten Zählschritten generiert werden.

Der erfindungsgemäße Impulsgeber weist außerdem eine Zähl- und Speichereinheit auf, in welcher die von der Sensorik eingehenden Signale als Zählpulse oder Zähleinheiten gespeichert werden. Diese Zähl- und Speichereinheit kann beispielsweise als Mikrocontroller ausgebildet sein.

Die von der Sensorseite eingehenden Signale, beispielsweise in Gestalt von Pulsen, werden in der Zähl- und Speichereinheit aufsummiert. Immer dann, wenn ein vorgegebener Zählwert erreicht wird, wird auf der Ausgangssignalseite ein Schaltelement angesteuert, um die Schnittstelle zu dem nachgeschalteten Auswertegerät mit einem Impuls zu beaufschlagen. Bei herkömmlichen Pulsgebern werden dafür Reedschalter in den ausgangsseitigen Impulskanal geschaltet, wobei der Schalter die geöffnete Stellung als Grundstellung aufweist. Nur zur Impulsausgabe wird das Schaltelement zeitweise geschlossen. Dabei ist die Frequenz der Schalterschließung abhängig vom Durchfluss durch das Messinstrument. Die Verwendung eines Schaltelementes, welches die Funktion eines Reedschalters erfüllt ist grundsätzlich auch bei der Erfindung vorgesehen. Es können jedoch abgewandelte Schaltelemente vorgesehen sein, beispielsweise kann ein Transistor verwendet werden, um die Funktion des Reedschalters zu übernehmen.

Erfindungsgemäß wird die für den gesamten Vorgang der Erfassung von Sensorsignalen, deren Speicherung und die Impulserzeugung für nachgeschaltete Auswertegeräte benötigte elektrische Energie aus dem Ausgangs-Impulskanal gewonnen.

Im Rahmen dieser Erfindung sind nachgeschaltete Auswertegeräte beispielhaft genannt, es können beispielsweise Datenlogger, Flow-Computer oder Mengenumwerter verwandt werden. Wenn im weiteren beispielhaft eine dieser Gerätearten genannt ist, kann alternativ auch eine andere Geräteart verwendet werden. Dafür ist nicht nur das Schaltelement (der Transistor) zur Pulsabgabe mit dem ausgangsseitigen Pulskanal gekoppelt sondern auch eine Energie-Management-Schaltung in dem erfindungsgemäßen Pulsgeber. Die erfindungsgemäße Einrichtung ermöglicht also einerseits die Kopplung des Ausgangs-Impulskanals über eine Schalteinrichtung mit Masse, koppelt aber außerdem den Ausgangs-Impulskanal zur Strom-/Spannungsversorgung auch mit der erfindungsgemäßen Einrichtung.

Dieser Ansatz funktioniert, da nachgeschaltete Geräte in Gestalt von Mengenumwertern und Flow-Computern auf deren Eingangsseite (Ausgangsseite der erfindungsgemäßen Pulsgebereinrichtung) eine Impulskanal-Spannung anlegen, um die Impulserzeugung des Impulsgebers zu detektieren, die durch den Schaltvorgang in dem Impulsgeber erzeugt wird. Die nachgeordneten Geräte detektieren dann einen Stromfluss oder Spannungsabfall, wenn die Schalteinrichtung den Impulskanal mit Masse koppelt.

Der erfindungsgemäße Pulsgeber weist ein Energiemanagement auf, welches den Pulsgeber aus dieser Messspannung am Impulskanal bei Aufnahme einer sehr geringen Stromstärke versorgt. Der Stromverbrauch ist so gering, dass ein nachgeschaltetes Auswertegerät den Schalter noch als geöffneten Schalter interpretiert, beispielsweise im Bereich von 0,5 - 3 µA, insbesondere 1 µA.

Es ist jedoch unvermeidlich, dass die Stromversorgung durch die ausgangsseitige Impulsleitung immer dann unterbrochen wird, wenn das Schaltelement auf der Impulsleitung zur Pulsausgabe zum Schließen angesteuert wird. Dann bricht die Spannung am Abgriff zur Versorgung des erfindungsgemäßen Pulsgebers zusammen.

Die erfindungsgemäße Einrichtung sieht dazu vor, einen Pufferspeicher vorzusehen, beispielsweise in Gestalt eines Kondensators, der während der Versorgung durch den ausgangsseitigen Impulskanal geladen wird und immer dann die Versorgung des Impulsgebers übernimmt, wenn der Schalter zur Ausgabe eines Impulses geschlossen wird.

Wird der Schalter auf dem ausgangsseitigen Impulskanal wieder geöffnet, so kann der Pufferspeicher wieder aufgeladen werden. Die erfindungsgemäße Einrichtung schneidet sich also gleichsam durch Impulsausgabe regelmäßig selbst von der Energieversorgung ab und versorgt sich für diesen Zeitraum aus dem eigenen, implementierten Pufferspeicher. Die übrige Zeit, in der auf dem Impulskanal eine Spannung anliegt, wird ein sehr geringer Strom für die Versorgung des erfindungsgemäßen Impulsgebers verwandt.

Wesentlich ist also, dass die erfindungsgemäße Einrichtung den Energiebedarf durch eine Stromabnahme aus dem ausgangsseitigen Impulskanal deckt, welchen sie selbst durch die Impulsausgabe zeitweise als Versorgung abschaltet. Diese versorgungsfreie Zeit wird durch einen internen, ladbaren Pufferspeicher überbrückt. Es ist dabei zu beachten, dass der Impulskanal bei Impulsausgabe mit Erde gekoppelt wird - eine Entladung der Ladungsreserven des Impulsgebers über die Versorgungsschnittstelle muss während dieser Zeit verhindert werden.

Möglich wird dies durch die Sperrung der Versorgungskopplung mit dem ausgangsseitigen Impulskanal für die Dauer der Pulsausgabe. Dies ist mit aktiven Schaltelementen oder auch entsprechend dimensionierten Dioden möglich, die zwar einen Stromabgriff aus dem Impulskanal erlauben, einen Stromfluss in Richtung des geerdeten Impulskanals aber unterbinden.

Der Pufferspeicher versorgt in diesem Zeitraum die Schaltung zur Verarbeitung der Sensoreingangssignale und die Zähl-Speichereinheit.

Bei einer Weiterbildung der Erfindung wird als Stromsensor für die eingangsseitige Impulserfassung ein Wiegand-Sensor verwendet, dessen erzeugte Impulse ebenfalls zur Stromversorgung und zur Ladung des Pufferspeichers beitragen. Zum Gewinnen von Versorgungsspannung aus den Sensorsignalen eines Wiegand-Sensors in derartigen Zähleinrichtungen wird beispielhaft auf die US 5,530,298 oder auch die US 7,747,419 sowie die EP 2 453 424 verwiesen.

Die Kombination der Energiegewinnung aus dem ausgangsseitigen Impulskanal mit der Versorgung durch den eingangsseitigen Impulssensor ist besonders vorteilhaft, da die Sicherheit der Versorgung weiter verbessert wird.

In einer weiteren bevorzugten Ausführungsform der Erfindung ist ein strombegrenzendes Element in der erfindungsgemäßen Einrichtung vorgesehen. Wird als Pufferspeicher beispielsweise ein Kondensator verwendet, ist nach jeder Impulsausgabe, dann wenn der Kondensator maximal entladen ist, weil er den zuvor verstrichenen, versorgungslosen Zeitraum überbrücken musste, der Ladestrom des Kondensators maximal. Auf Ausgangsseite, am Impulskanal muss jedoch jederzeit vom nachgeordneten Auswertegerät die Schalterstellung als offen erkannt werden. Würde zu viel Strom in die erfindungsgemäße Schaltung abgezogen, könnte das nachgeordnete Auswertegerät eine Impulsausgabe detektieren, die durch einen Stromabfluss signalisiert wird. Entsprechend wird in die Versorgungsleitung aus dem Impulskanal ein Strombegrenzer eingebracht, welcher den Strom während der kompletten Ladephase auf ein tolerierbares Maximum begrenzt. Welchen Wert dieses Maximum hat, ist von dem nachgeordneten Mengenumwerter oder Flow-Computer abhängig, beispielsweise kann ein Maximum von 1 µA festgelegt werden.

Die Erfindung wird nun anhand der beiliegenden Figuren näher erläutert.
Figur 1 zeigt in schematischer Weise die Anordnung eines erfindungsgemäßen Impulsgenerators mit gekoppeltem Eingangssensor und ausgangsseitigem Impulskanal;
Figur 2 zeigt in schematischer Weise den Zeitverlauf von Signalen, Energiezuständen und Schaltzuständen.

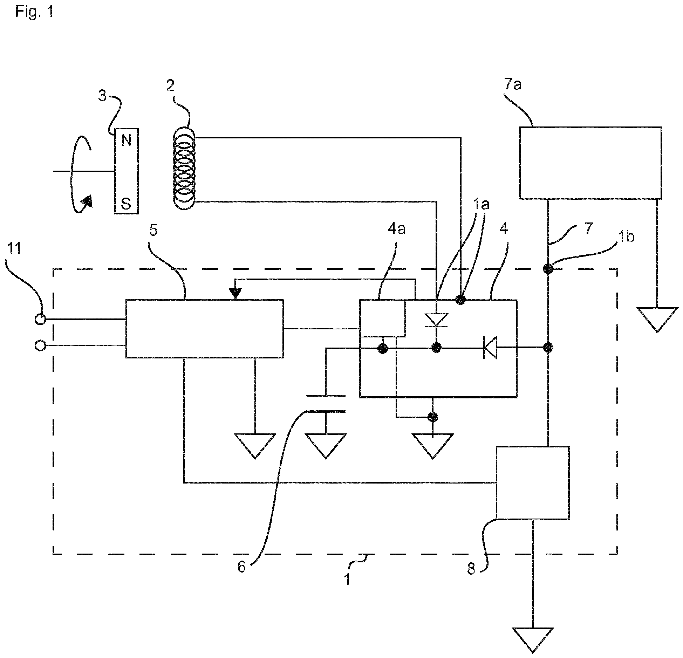

In Figur 1 ist ein erfindungsgemäßer Impulsgenerator 1 dargestellt. Der Impulsgenerator 1 ist eingangsseitig mit einem Impulsdraht-Sensor 2 gekoppelt. Der Impulsdraht-Sensor 2 ist im Magnetfeld eines sich drehenden Permanentmagneten 3 angeordnet, welcher durch einen Fluidfluss angetrieben wird (wie dies aus herkömmlichen Fluidzählern bekannt ist). In dem Impulsgenerator 1 ist eine Schaltung 4 zum Energiemanagement angeordnet. Diese Schaltung für das Energiemanagement ist mit dem Impulsdraht-Sensor 2 gekoppelt. Außerdem ist die Schaltung zum Energiemanagement 4 mit einer Zähl- und Speichereinrichtung 5 gekoppelt. Ebenfalls gekoppelt mit der Schaltung zum Energiemanagement 4 ist einer Pufferspeicher 6 in Gestalt eines Kondensators. Die Einrichtung 1 weist außerdem eine Schnittstelle zum Impulskanal 7 auf, an dem ein nachgeordnetes Auswertegerät 7a, in diesem Ausführungsbeispiel ein Flow-Computer, zugeschaltet ist. Am Impulskanal 7 liegt seitens des Flow-Computers 7a eine Spannung an und ein in der Einrichtung 1 angeordnetes Schaltelement 8 trennt den Impulskanal von Masse. Immer dann, wenn das Schaltelement 8 geschlossen wird, wird im Flow-Computer ein signifikanter Stromfluss/Spannungsabfall festgestellt, was als Impuls gewertet wird. Die Schließung des Schaltelements 8 wird immer dann veranlasst, wenn sich in der Zähl-Speichereinheit 5 die Anzahl von detektierten Pulsen seitens des Impulsdraht-Sensors 2 wieder um eine vorgegebene Anzahl erhöht hat. Für eine gegebene Anzahl von Pulsen in der Zähl-Speichereinheit 5 wird also ausgangsseitig eine Impulsausgabe durch Schalterschluss des Schalters 8 hervorgerufen.

Die Schaltung zum Energiemanagement 4 weist in diesem Ausführungsbeispiel zwei Dioden auf. Über eine der Dioden ist der Impulskanal 7 mit dem Energiemanagement gekoppelt. Der Impulskanal ist also nicht nur mit dem Schaltelement 8 gekoppelt, sondern auch mit dem Energiemanagement zum Versorgen des Impulsgenerators 1. Über die Schaltung zum Energiemanagement 4 wird auch die Zähl-Speichereinheit 5 Spannungsversorgt. Der Kondensator 6 wird geladen, solange über den Impulskanal Spannung zur Verfügung gestellt wird und die Energie sowohl zum Betrieb der Schaltung als auch zum Laden des Kondensators ausreicht.

In diesem Ausführungsbeispiel ist außerdem ein Baustein 4a zur Spannungskonditionierung als Teil der Schaltung zum Energiemanagement 4 vorgesehen. Dieser Baustein sorgt insbesondere während der Phase unmittelbar nach Inbetriebnahme des erfindungsgemäßen Impulsgenerators für eine Anpassung der Spannungszustände für die Zähl-Speichereinheit. Wenn der Kondensator 6 nämlich noch völlig ungeladen ist und eine erstmalige Aufladung erfolgt, kann es ansonsten zu Fehlversorgungen der Zähl-Speichereinheit kommen.

Im Betrieb erfasst der Impulsdraht-Sensor 2 die Drehungen des Permanentmagneten 3 und generiert Impulse, welche über die Diode im Energiemanagement 4 der Zähl-Speichereinheit zugeleitet werden.

Die von dem Impulsdraht-Sensor 2 erzeugten Impulse werden in der Zähl-Speichereinheit 5 aufsummiert. Immer dann, wenn eine vorgegebene Anzahl von Pulsen akkumuliert wurde, wird das Schaltelement 8 zur Ausgabe eines Pulses angesteuert. In der Zähl-Speichereinheit kann dann die Anzahl der akkumulierten Pulse wieder um den vorgegebenen Betrag reduziert werden.

Als Schaltelement 8 wird in diesem Ausführungsbeispiel ein Transistor verwendet, der in der Grundstellung geöffnet ist und damit jeden signifikanten Stromfluss durch den Impulskanal sperrt. Wird jedoch der Schalter 8 über Anlegen einer Gatespannung geschlossen und der Impulskanal dadurch mit Masse gekoppelt, detektiert der nachgeschaltete Flow-Computer den Impuls und erhöht den Zählerstand bzw. errechnet ein neues Gasvolumen. Für die Dauer der Schalterschließung ist jedoch aus Figur 1 ersichtlich, dass die erfindungsgemäße Einrichtung dann von der externen Stromzufuhr getrennt ist. Die Einrichtung zum Energiemanagement 4 ist zwar weiterhin mit dem Impulskanal 7 gekoppelt, aufgrund der Kopplung mit Masse über den Schalter 8 ist jedoch keine Versorgungsspannung verfügbar. Die Diode in dem Baustein 4 für das Energiemanagement sperrt einen Stromfluss in Richtung Impulskanal und die Spannung wird durch den Pufferspeicher 6 für den Zeitraum des Schalterschlusses aufrechterhalten.

Hinsichtlich der Energieversorgung für die erfindungsgemäße Schaltung kann ein derartiges erfindungsgemäßes Gerät auf eine bestimmte Art von nachgeschalteten Datenloggern, Flow-Computern oder Mengenumwertern angepasst werden. Um ein möglichst großes Spektrum von Geräten abzudecken ist die Schaltung bei unspezifischem Design auf eine Stromaufnahme von 1000 nA beschränkt. Bei solch geringem Stromverbrauch wird das Signal des Impulskanals von fast allen Arten von Flow-Computern, Mengenumwertern oder Datenloggern als geöffneter Schalter interpretiert.

Die komplette erfindungsgemäße Einrichtung zur Impulserzeugung kann in der Praxis in einem Zählwerkskopf verbaut werden an dem dann der Impulskanal angeschlossen wird. Dies ermöglicht auch eine Verplombung des Zählwerkskopfes und damit die Sperrung eines Zugriffs auf die erfindungsgemäße Einrichtung, beispielsweise um die Impulswertigkeiten zu verändern.

Nachgeschaltet zu dem erfindungsgemäßen Gerät ist jedenfalls ein Datenlogger, Mengenumwerter oder Flow-Computer, welcher die Impulssignale empfängt und ggf. durch Daten bezüglich Druck und/oder Temperatur normierte Gasvolumen berechnet.

Wie vorstehend gesagt, kann die Wertigkeit des Ausgabeimpulses im Verhältnis zur Wertigkeit der Eingangsimpulse anfänglich oder auch nachträglich durch Programmierung der Zähl-Speichereinheit verändert werden. Hierfür ist eine Schnittstelle 11 zur Programmierung der Zähl-/Speichereinheit vorgesehen.

Grundsätzlich kann bei der Erfindung auch der Sensor 2 mit Energie versorgt werden, bei der Ausführungsform in diesem Beispiel ist der Impulsdraht-Sensor 2 jedoch ein aktiver Sensor, der ohne zusätzliche Energieversorgung auskommt. In diesem Ausführungsbeispiel ergänzt die Energie aus dem Impulsdraht-Sensor die dem Impulskanal entzogene Energie zur Versorgung des erfindungsgemäßen Geräts 1 und zur Ladung des Pufferkondensators 6.

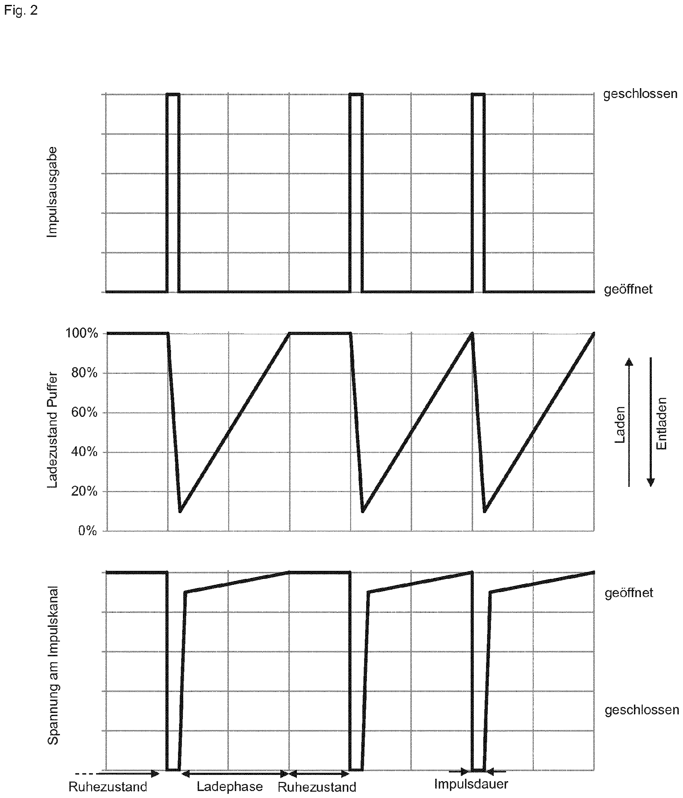

Figur 2 zeigt in schematischer Weise den zeitlichen Verlauf von Signalen und Energieniveaus.

Die obere Grafik zeigt die Impulsausgabe des erfindungsgemäßen Impulsgenerators auf der ausgangsseitigen Signalleitung, also dem Impulskanal 7. Immer dann, wenn der Schalter 8 geschlossen wird, steigt der Stromfluss auf dem Impulskanal sprunghaft an und sinkt wieder auf nahezu 0 ab, wenn der Schalter wieder geöffnet wird.

Die mittlere Grafik zeigt zur oberen Grafik synchron den Ladezustand des Pufferkondensators 6. Bei zunächst geöffnetem Schalter ist der Pufferkondensator vollgeladen und wird durch die Schließung des Schalters und die dadurch bedingte Versorgung der Schaltungskomponenten entladen. Zum Ende der Pulsausgabe, also bei erneuter Öffnung des Schalters steigt das Ladungsniveau durch Aufladung des Kondensators 6 über Strom aus dem Impulskanal wieder an.

Die untere Grafik zeigt den Spannungsverlauf am Impulskanal, wo die Spannung bei geöffnetem Schalter maximal ist, bei geschlossenem Schalter zusammenbricht und bei erneuter Öffnung des Schaltelements während der Ladephase des Kondensators erneut ansteigt.

## Patentansprüche

1. Impulsgeber (1) für eine Zähleranordnung zur Erfassung von Fluid-Durchflussmengen,
wobei der Impulsgeber (1) eine eingangsseitige Sensor-Schnittstelle (1a) zur Kopplung mit einer Sensor-Signalquelle (2) aufweist,
wobei der Impulsgeber eine ausgangsseitige Impulskanal-Schnittstelle (1b) zur Kopplung mit einem nachgeordneten Impulskanal (7) aufweist,
wobei der Impulsgeber eine Zähl- und Speichereinheit (5) aufweist, welche die eingangsseitigen Sensorsignale akkumuliert und speichert,
wobei eine Schalteinrichtung (8) ausgebildet ist, die derart mit der Impulskanal-Schnittstelle (1b) gekoppelt ist, dass ein angekoppelter Impulskanal (7) mit Masse koppelbar oder von Masse trennbar ist, wobei die Zähl- und Speichereinheit (5) zur Ansteuerung der Schalteinrichtung (8) in Abhängigkeit von einer in der Zähl- und Speichereinheit akkumulierten Eingangs-Impulszahl ausgebildet ist,
**dadurch gekennzeichnet,**
**dass** eine Energie-Management-Schaltung (4) ausgebildet ist, welche mit der Impulskanal-Schnittstelle (1b) zum Spannungsabgriff gekoppelt ist, um den Impulsgeber (1) mit Strom aus einem angekoppelten Impulskanal (7) zu versorgen,
wobei ein ladbarer Ladungs-Pufferspeicher (6) derart mit der Energie-Management-Schaltung (4) gekoppelt ist, dass der Ladungs-Pufferspeicher (6) dann, wenn die Schalteinrichtung (8) einen angekoppelten Impulskanal (7) von Masse trennt aufgeladen wird und dann, wenn die Schalteinrichtung (8) einen angekoppelten Impulskanal (7) mit Masse koppelt, zur Stromversorgung des Impulsgebers entladen wird.

2. Impulsgeber nach Anspruch 1, wobei der Pufferspeicher (6) als Kondensator ausgebildet ist.

3. Impulsgeber nach Anspruch 1 oder 2, wobei die Schalteinrichtung (8) als Reed-Schalter ausgebildet ist.

4. Impulsgeber nach einem der vorangehenden Ansprüche, wobei eine aktive Impulsquelle (2) als Sensor-Signalquelle an die Schnittstelle (1a) zur Kopplung mit einer Sensor-Signalquelle gekoppelt ist.

5. Impulsgeber nach Anspruch 4, wobei die aktive Impulsquelle (2) eine Impulsdraht-Sensor (Wiegand-Sensor) ist.

6. Impulsgeber nach einem der vorangehenden Ansprüche, wobei die Zähl-/Speichereinheit (5) mit einer Programmierschnittstelle (11) versehen ist, um ein Verhältnis von gezählten Eingangsimpulsen zu Ausgangspulsen zu programmieren.

7. Impulsgeber nach einem der vorangehenden Ansprüche, wobei ein Strombegrenzer zwischen die Impulskanal-Schnittstelle und den Puffer-Speicher geschaltet ist, um den Ladestrom des Pufferspeichers zu begrenzen, insbesondere auf weniger als 1000 nA.

## Claims

1. Pulse generator (1) for a counter arrangement for detecting fluid flow rates,
wherein the pulse generator (1) has an input-side sensor interface (1a) for coupling to a sensor signal source (2),
wherein the pulse generator has an output-side pulse channel interface (1b) for coupling to a downstream pulse channel (7),
wherein the pulse generator has a counting and storage unit (5) which accumulates and stores the input-side sensor signals,
wherein a switching device (8) is formed, which is coupled to the pulse channel interface (1b) such that a coupled pulse channel (7) can be coupled to ground or disconnected from ground, wherein the counting and storage unit (5) for controlling the switching device (8) is configured dependent on an input pulse number accumulated in the counting and storage unit,
**characterised in that**
an energy management circuit (4) is formed, which is coupled to the pulse channel interface (1b) for voltage tapping in order to supply the pulse generator (1) with current from a coupled pulse channel (7), wherein a chargeable charge buffer memory (6) is coupled to the power management circuit (4) such that the charge buffer memory (6) is charged when the switching device (8) disconnects a coupled pulse channel (7) from ground and is discharged when the switching device (8) couples a coupled pulse channel (7) to ground, for the power supply of the pulse generator.

2. Pulse generator according to claim 1, wherein the buffer storage (6) is designed as a capacitor.

3. Pulse generator according to claim 1 or 2, wherein the switching device (8) is designed as a reed switch.

4. Pulse generator according to any one of the preceding claims, wherein an active pulse source (2) is coupled as a sensor signal source to the interface (1a) for coupling to a sensor signal source.

5. Pulse generator according to claim 4, wherein the active pulse source (2) is a pulse wire sensor (Wiegand sensor).

6. Pulse generator according to any one of the preceding claims, wherein the counting/storing unit (5) is provided with a programming interface (11) for programming a ratio of counted input pulses to output pulses.

7. Pulse generator according to any one of the preceding claims, wherein a current limiter is connected between the pulse channel interface and the buffer memory in order to limit the charging current of the buffer memory, in particular to less than 1,000 nA.

## Revendications

1. Générateur d'impulsions (1) pour un ensemble formant compteur servant à détecter des débits de fluide,
dans lequel le générateur d'impulsions (1) présente une interface de capteur (1a) côté entrée servant au couplage avec une source de signaux de capteur (2),
dans lequel le générateur d'impulsions présente une interface de canal d'impulsions (1b) côté sortie servant au couplage avec un canal d'impulsions (7) disposé en aval,
dans lequel le générateur d'impulsions présente une unité de comptage et de stockage (5), qui accumule et stocke les signaux de capteur côté entrée,
dans lequel est réalisé un dispositif de commutation (8), qui est couplé de telle manière à l'interface de canal d'impulsions (1b) qu'un canal d'impulsions (7) accouplé peut être couplé à la masse ou peut être coupé de la masse, dans lequel l'unité de comptage et de stockage (5) est réalisée pour piloter le dispositif de commutation (8) en fonction d'un nombre d'impulsions d'entrée accumulé dans l'unité de comptage et de stockage,
**caractérisé en ce**
**qu'**est réalisé un circuit de gestion d'énergie (4), lequel est couplé à l'interface de canal d'impulsions (1b) aux fins du prélèvement de tension pour alimenter le générateur d'impulsions (1) en courant provenant d'un canal d'impulsions (7) accouplé,
dans lequel un accumulateur tampon de chargement (6) chargeable est couplé de telle manière au circuit de gestion d'énergie (4) que l'accumulateur tampon de chargement (6) est chargé quand le circuit de commutation (8) sépare un canal d'impulsions (7) accouplé de la masse et est déchargé quand le dispositif de commutation (8) couple un canal d'impulsions (7) accouplé à la masse, aux fins de l'alimentation en courant du générateur d'impulsions.

2. Générateur d'impulsions selon la revendication 1, dans lequel l'accumulateur tampon (6) est réalisé en tant que condensateur.

3. Générateur d'impulsions selon la revendication 1 ou 2, dans lequel le dispositif de commutation (8) est réalisé en tant que commutateur à lames.

4. Générateur d'impulsions selon l'une quelconque des revendications précédentes, dans lequel une source d'impulsions (2) active est couplée en tant que source de signaux de capteur à l'interface (1a) aux fins du couplage à une source de signaux de capteur.

5. Générateur d'impulsions selon la revendication 4, dans lequel la source d'impulsions (2) active est un capteur à fil à impulsions (capteur de Wiegand).

6. Générateur d'impulsions selon l'une quelconque des revendications précédentes, dans lequel l'unité de comptage/de stockage (5) est pourvue d'une interface de programmation (11) pour programmer un rapport entre impulsions d'entrée comptées et impulsions de sortie.

7. Générateur d'impulsions selon l'une quelconque des revendications précédentes, dans lequel un limiteur de courant est branché entre l'interface de canal d'impulsions et l'accumulateur tampon, pour limiter le courant de charge de l'accumulateur tampon, en particulier à moins de 1000 nA.
